# EUROPEAN PATENT APPLICATION

(11) **EP 1 489 780 A2**
(43) Date of publication of application: **22.12.2004**
(21) Application number: 04253485.9
(22) Date of filing: 11.06.2004
(51) Int. Cl.: H04L 12/28

(54) **Wireless network communication method using access point**

(30) Priority: 18.06.2003 KR 2003039531
(71) Applicant: Samsung Electronics Co., Ltd., Suwon-si, Gyeonggi-do (KR)
(72) Inventor: Choi, Hyong-uk, Gangseo-gu, Seoul (KR); Kim, Jun-whan, Seoul (KR)
(74) Representative: Robinson, Ian Michael

(57) **Abstract**

A wireless network communication method using an Access Point (AP). The method includes creating a polling list based on association identifications of stations (1,2,3,4) stored in the AP. Thereafter, a polling signal is transmitted to one of the stations (1,2,3,4) according to the polling list in an interval of a PCF mode. Data, which will be transmitted, is transmitted from the station in response to the polling signal transmitted from the AP. The data transmitted from the station is received by the AP, and is stored in a buffer of the AP. The number of pieces of data is compared with a threshold value set in the buffer. If the number of the pieces of data exceeds the threshold value, a polling signal is not transmitted to a next station and data stored in the buffer is transmitted to relevant stations (1,2,3,4).

## Description

The present invention relates generally to a wireless network communication method using an access point and, more particularly, to a wireless network communication method using an access point, which minimises a time delay in regard to the data transmission.

In general, an IEEE 802.11 Wireless Local Area Network (WLAN) employs electric waves or infrared rays instead of cables and uses the atmosphere as a communication channel at the time of constructing a network system.

The IEEE 802.11 WLAN includes an Access Point (AP) configured to convert IEEE 802.11 frames into another form to transfer the frames from one network to another network, that is, to perform a bridging function between a wireless network and a wired network, and stations, such as notebook computers and Personal Digital Assistants (PDAs) each equipped with a WLAN device capable of interfacing with the wireless network.

The IEEE 802.11 WLAN is composed of Basic Service Sets (BSSs), each of which refers to a group of stations that communicate with each other.

The BSSs may be classified into two types: independent BSSs in which one station directly communicates with the other stations, and infrastructure BSSs in which one station communicates with the other stations through an AP. Of the two types, the infrastructure BSSs allow the stations to communicate only with the AP, so that communications are not performed between the stations.

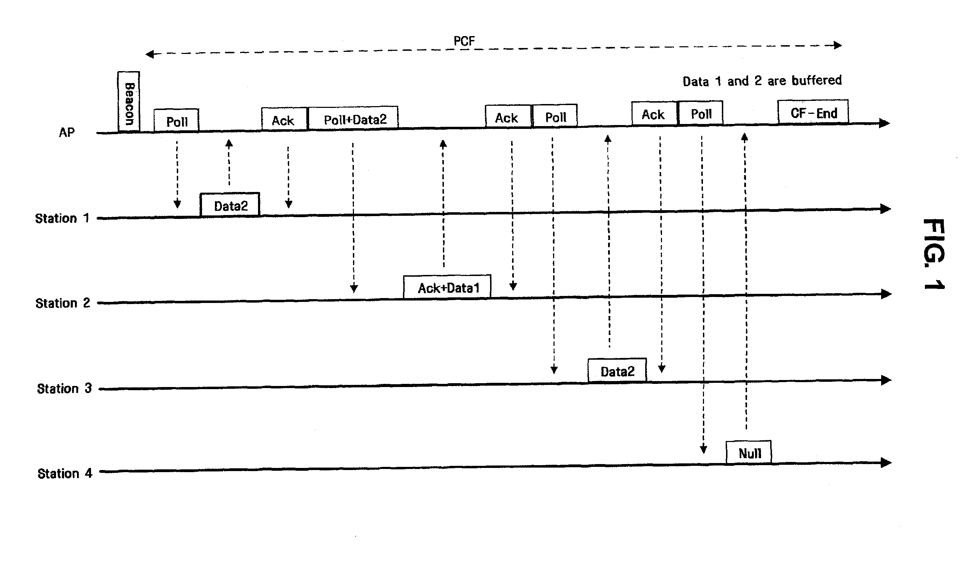

Figure 1 is a diagram schematically showing a process of transmitting data in a conventional Point Coordination Function (PCF) mode. The PCF mode allows stations to transmit data under the control of an AP without contention. That is, in accordance with the PCF mode, the AP gives an opportunity to a station by transmitting a polling signal to the station.

For example, when the AP transmits a polling signal to station 1, the station 1 having received the polling signal transmits data 2, which will be transmitted to station 2, to the AP. The AP transmits an ACK to station 1 and, thereafter, transmits a polling signal to station 2. At this time, since there exists the data 2 that will be transmitted to station 2, the AP transmits the polling signal and the data 2 together (i.e., "piggyback"). In this case, "piggyback" indicates that the AP transmits data and a polling signal together to the station, which is possible only in a contention-free period.

Thereafter, station 2 transmits an ACK and data 1, which will be transmitted to the station 1, to the AP. The AP transmits an ACK to station 2 and, thereafter, transmits a polling signal to station 3.

Thereafter, station 3 transmits data 2, which will be transmitted to station 2, to the AP. The AP transmits an ACK to station 3 and, thereafter, transmits a polling signal to station 4. Since station 4 has no data that will be transmitted to station 4, station 4 transmits a null signal to the AP.

Under these circumstances, a PCF period is terminated while the data 1 and the data 2 are stored in the buffer of the AP.

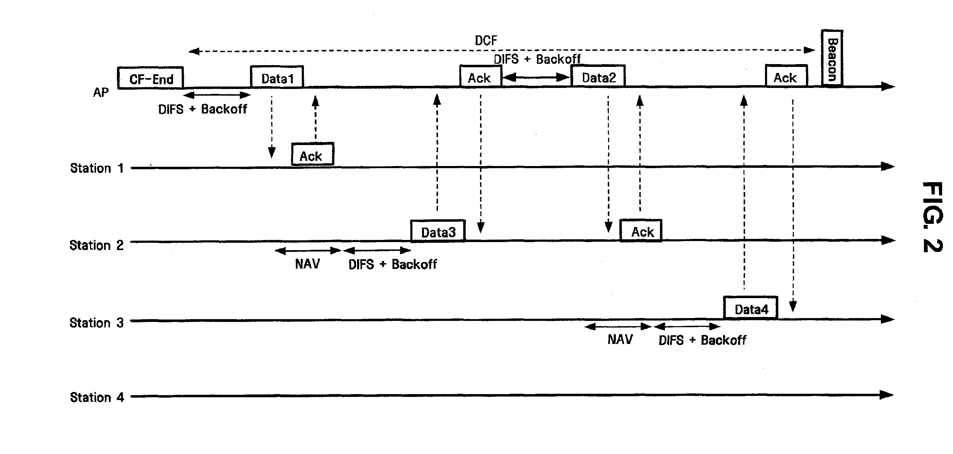

Figure 2 is a diagram schematically showing a process of transmitting data in a conventional Distributed Coordination Function (DCF) mode. The DCF allows only an AP or a station, which wins contention between the AP and stations, to transmit data.

The AP and all the stations transmit data through contention. Data 1 transmitted to the AP through contention is transmitted from the AP to station 1 through contention again. In this case, when a station that wins the contention transmits data, the station generates a Network Allocation Vector (NAV), and delays the access of all the stations to a medium for a certain amount of time, e.g., a number of microseconds, after a current frame is transmitted.

In the case where a channel is being used, an idle state is maintained at a Distributed Inter-Frame Space (DIFS), and a "backoff" is performed. The backoff is the delay time required before attempting to retransmit data in the case where a data transmission signal has experienced a collision on a WLAN.

All the stations make contention after waiting for a DIFS, and station 2 wins the contention and transmits data 3. Through the contention, the AP and all the stations transmit data.

However, as shown in Figure 1, since the AP transmits pooling signals to the stations in random order, the data transmission and reception of the stations are determined according to the pooling signals transmitted from the AP, so that data are accumulated in the buffer of the AP. Furthermore, as shown in Figure 2, since, in the interval of the DCF mode, the AP transmits data stored in the buffer through contention with the stations, a problem arises in that the transmission of data transmitted to the AP in the interval of the PCF mode is delayed.

Accordingly, under a worst case scenario, data stored in the buffer of the AP are all discarded. Since, in the DCF mode, all data are transmitted to the AP first through contention and, thereafter, are transmitted to the stations through contention again, data are accumulated in the buffer of the AP. Accordingly, in the case where the number of stations connected to the AP increases or the number of stations to which data are transmitted increases, the above problem becomes serious.

According to the present invention there is provided an apparatus and method as set forth in the appended claims. Preferred features of the invention will be apparent from the dependent claims, and the description which follows.

The present invention has been made keeping in mind the above problems occurring in the prior art, and the present invention provides a wireless network communication method using an AP, in which, in a PCF mode, a threshold value is set in the buffer of the AP, so that data stored in the buffer can be transmitted to relevant stations without delay.

Another aspect of the present invention provides a wireless network communication method using an AP, in which, in the interval of a DCF mode, priority for data transmission is granted to the AP, thus minimizing the delay for the data transmission.

That is, in the present invention, at the time of transmitting data using the access point based on an IEEE 802.11 wireless local area network, a threshold value is set in the buffer of the access point and the priority of data transmission is granted to the access point.

An embodiment of the present invention provides a wireless network communication method using an AP, including creating a polling list based on association identifications of stations stored in the AP; transmitting a polling signal to one of the stations according to the polling list in an interval of a PCF mode; transmitting data, which will be transmitted, from the station in response to the polling signal transmitted from the AP; receiving the data transmitted from the station to the AP; storing the data received from the station in a buffer of the AP; comparing the number of pieces of data stored in the buffer with a threshold value set in the buffer; and if, as a result of the comparison, the number of the pieces of data has exceeded the threshold value, not transmitting a polling signal to a next station and transmitting the data stored in the buffer to relevant stations.

In addition, the present invention provides a wireless communication method using an AP in an infrastructure mode having an interval of a PCF mode and an interval of a DCF mode, including, when the interval of the DCF mode starts, determining whether data exist in a buffer of the AP; if, as a result of the determination, the data exists in the buffer, transmitting the data stored in the buffer to relevant stations; and transmitting data from one of the stations through contention.

In addition, the present invention provides a wireless network communication method using an AP, including causing the AP and stations to make contention to transmit data in an interval of a DCF mode; transmitting data from one of the stations having won the contention to the AP; storing the data transmitted to the AP in a buffer of the AP; transmitting the data stored in the buffer from the AP to a relevant station; and transmitting data from the AP and the stations through contention.

For a better understanding of the invention, and to show how embodiments of the same may be carried into effect, reference will now be made, by way of example, to the accompanying diagrammatic drawings in which:
Figure 1 is a diagram schematically showing a process of transmitting data in a conventional PCF mode;
Figure 2 is a diagram schematically showing a process of transmitting data in a conventional DCF mode;
Figure 3 is a flowchart schematically showing a process of transmitting data in the PCF mode of a WLAN in accordance with the present invention;
Figure 4 is a flowchart schematically showing a process of transmitting data in the DCF mode of a wireless DCF in accordance with the present invention;
Figure 5 is a flowchart schematically showing a process of transmitting data through contention in the DCF mode of a WLAN in accordance with the present invention;
Figure 6 is a diagram schematically showing a process of transmitting data through contention in the PCF mode of a WLAN in accordance with the present invention;
Figure 7 is a diagram schematically showing a process of transmitting data through contention in the DCF mode of a WLAN in accordance with the present invention;
Figure 8 is a diagram schematically showing a process of transmitting data through contention in the DCF mode of a WLAN in accordance with the present invention;
Figure 9 is a graph showing the difference between throughput in the DCF mode of the present invention and throughput in a conventional DCF mode; and
Figure 10 is a graph showing the difference between throughput in the PCF mode of the present invention, in which a threshold value is set, and throughput in a conventional PCF mode.

Reference now should be made to the drawings, in which the same reference numerals are used throughout the different drawings to designate the same or similar components.

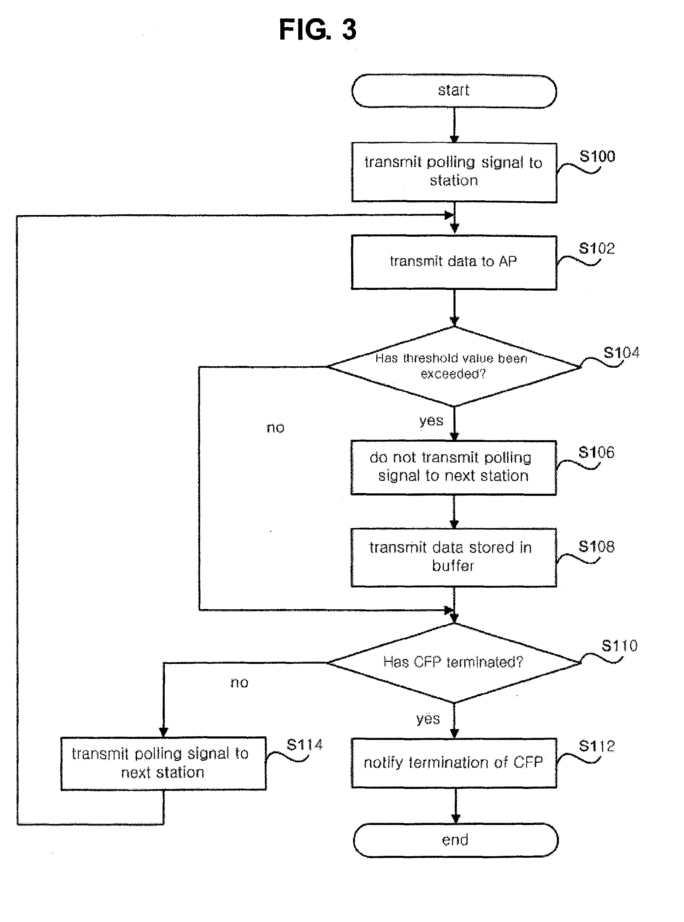

Figure 3 is a flowchart schematically showing a process of transmitting data in the PCF mode of a WLAN in accordance with the present invention. In an infrastructure network, an AP generates a polling list based on the association IDentifications (IDs) of stations, broadcasts a beacon, and transmits a polling signal to one of the stations based on the polling list at step S100. In this case, the beacon is a frame that functions to announce the existence of a network and maintain the network. The beacon includes interval information used to transmit data. The start of a Contention-Free Period (CFP) is announced at the period of the beacon.

Thereafter, the station having received the polling signal from the AP transmits data, which will be transmitted, to the AP at step S102. In this case, the AP transmits the polling signal to the station according to the order set in the polling list, and only a station having received the polling signal can transmit data.

Thereafter, the AP stores data transmitted from the stations in a buffer, and transmits data, which will be transmitted, together with a polling signal, at the time of transmitting the polling signal. The AP can transmit a single piece of data, together with a polling signal, to a specific station.

Meanwhile, the AP sets a certain threshold value in the buffer and determines whether the number of the pieces of data has exceeded the threshold value at step S104. By setting the threshold value, data stored in the buffer are transmitted to the relevant stations if the number of the pieces of data has exceeded the threshold value.

If the number of the pieces of data has exceeded the threshold value set in the buffer, the AP does not transmit a polling signal to a next station, and transmits data stored in the buffer to relevant stations after waiting for a PCF Inter-Frame Space (PIFS) at steps S106 and S108. In this case, a station having data, which will be transmitted, for a CFP can start transmission after a PIFS.

Thereafter, the stations having received the data transmit ACK to the AP after a Short Inter-Frame Space (SIFS). In this case, a frame having the highest priority, such as ACK, can start communication after a SIFS.

Thereafter, it is determined whether the CFP has terminated at step S110. If the CFP has terminated, the AP notifies all the stations of the termination of the CFP at steps S110 and S112. If the CFP has not terminated after the data stored in the buffer is transmitted to the relevant stations, the AP transmits a polling signal to a next station at step S114.

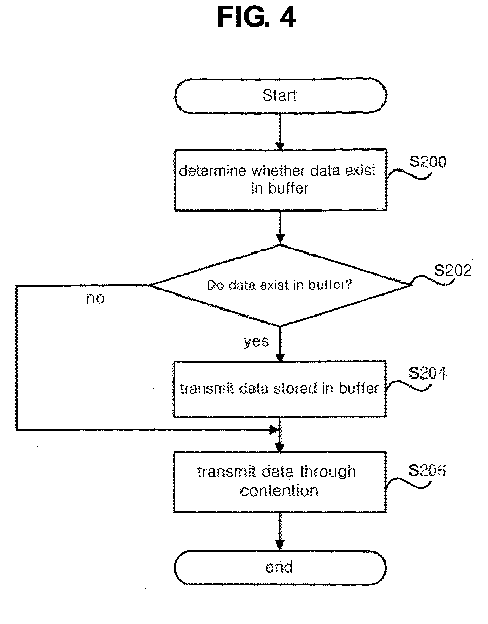

Figure 4 is a flowchart schematically showing a process of transmitting data in the DCF mode of a wireless DCF in accordance with the present invention. When a Contention Period (CP) starts, it is determined whether data exists in the buffer of the AP at step S200.

If, as the result of the determination, the data exists in the buffer of the AP, the data is transmitted to relevant stations just after a PIFS. In this case, the AP can transmit data because the interval of the PIFS is shorter than that of the DIPS.

In that case, since the AP is transmitting data, the stations maintain idle states for the DIFS and perform backoffs. All the stations transmit data to the AP through contention after the DIFS at step S206. In the DCF mode, only one of all the stations, which wins contention, can transmit data.

If as the result of the determination, the data does not exist in the buffer of the AP, the stations transmit data through contention at step S206.

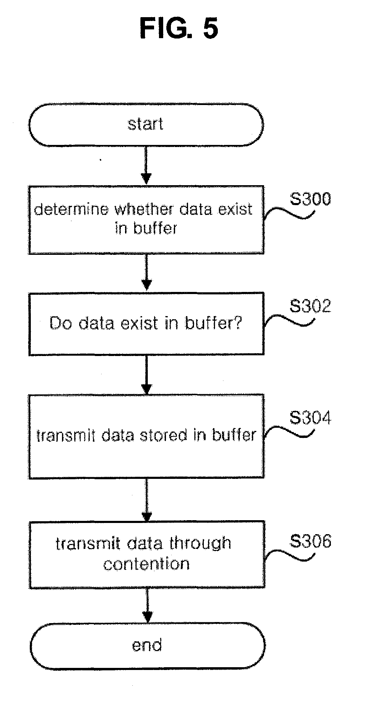

Figure 5 is a flowchart schematically showing a process of transmitting data through contention in the DCF mode of a WLAN in accordance with the present invention. The AP and the stations make contention to transmit data and a station having won the contention transmits data to the AP at steps S300 and S302.

Thereafter, the AP stores the transmitted data in the buffer and transmits the data stored in the buffer to a relevant station after a PIFS at step S304. After the AP has transmitted data, the AP and all the stations transmit data through contention after waiting for a DIFS at step S306. In this case, since the interval of the PIFS is shorter than that of the DIFS, the AP can transmit data first.

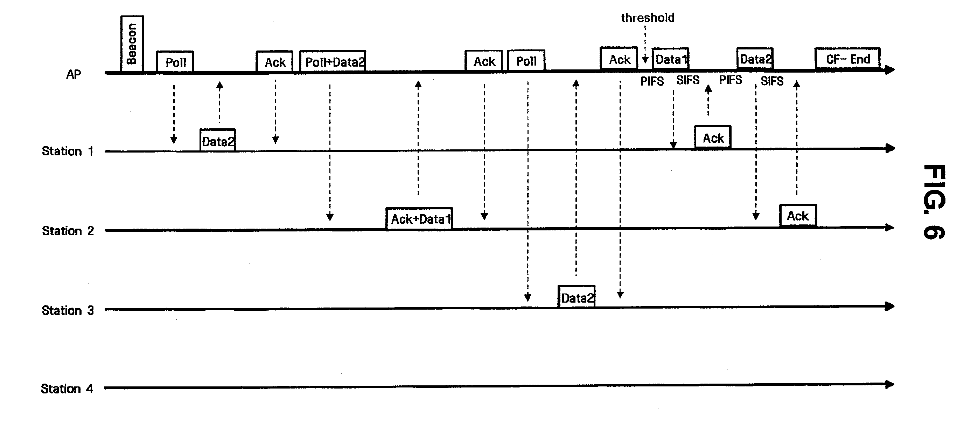

Figure 6 is a diagram schematically showing a process of transmitting data through contention in the PCF mode of a WLAN in accordance with the present invention. When an AP broadcasts a beacon and a polling signal to station 1 according to the order set in a pooling list, station 1 having received the polling signal from the AP transmits data 2, which will be transmitted to station 2, to the AP.

The AP transmits ACK to station 1 and stores the data 2 transmitted from station 1 in a buffer. Thereafter, the AP transmits a polling signal to station 2 according to the order set in the polling list. At this time, since there exists data that will be transmitted to station 2, the AP transmits the polling signal and the data 2.

When the AP transmits the polling signal and the data 2 to station 2, station 2 transmits data 1, which will be transmitted to station 1, together with ACK indicating the receipt of the data 2, to the AP.

The AP transmits ACK to station 2, and stores the data 1, which will be transmitted to station 1, in the buffer.

Thereafter, the AP transmits a polling signal to station 3, and station 3 transmits data 2, which will be transmitted to station 2, to the AP. The AP transmits ACK to station 3, and stores the data 2, which will be transmitted to station 2, in the buffer.

Since data are accumulated in the buffer of the AP when the above-described process is repeatedly performed, the AP sets a certain threshold value and determines whether the number of the pieces of data has exceeded the set threshold value. For example, in the case where the threshold value set in the buffer is two, the AP ascertains the number of the pieces of data and determines whether the number of the pieces of data has exceeded two. Since, as the result of the determination, the data 1 and the data 2 are stored in the buffer, the AP does not transmit a polling signal to a next station, that is, station 3, and transmits the data 1 and the data 2 stored in the buffer to station 1 and station 2, respectively. In this case, the AP transmits the data 1 to station 1 after waiting for a PIFS.

After the CFP has terminated, the AP notifies all the stations of the termination of the CFP and, subsequently, the interval of a DCF mode starts.

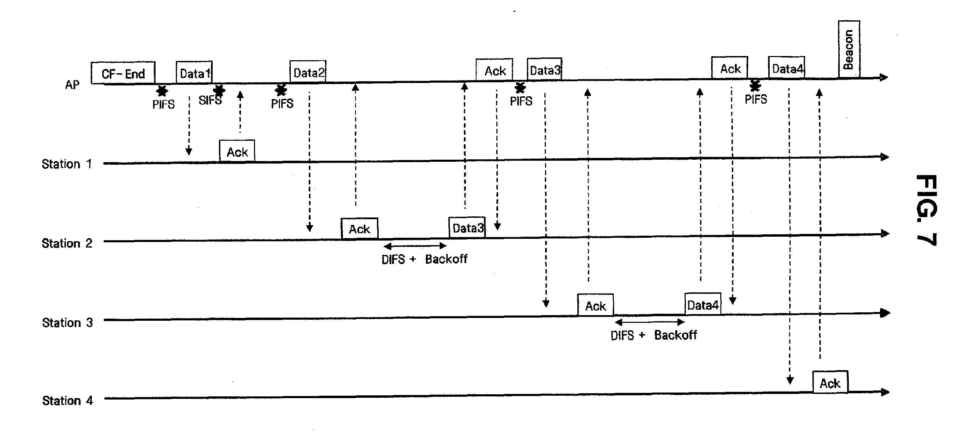

Figure 7 is a diagram schematically showing a process of transmitting data through contention in the DCF mode of a WLAN in accordance with the present invention, which illustrates a process of transmitting data stored in the buffer in the interval of a DCF mode in the case where the number of the pieces of data does not exceed the set threshold value.

When the interval of the DCF mode starts, the AP determines whether data exists in the buffer. Since, as the result of the determination, data 1 and data 2 exist in the buffer, the AP transmits these data to relevant stations, respectively. The AP transmits the data 1 to the station 1 after a PIFS, and station 1 transmits ACK to the AP after a SIFS, indicating the receipt of the data.

The AP transmits data 2 to station 2 after a PIFS. Station 2 transmits ACK indicating the receipt of the data to the AP after a SIFS. In this case, since the interval of the PIFS is shorter than that of the DIFS, the AP can transmit data first.

At this time, since the AP is transmitting the data, all the stations maintain idle states for a DIFS, and perform backoffs. After waiting for the DIFS and a backoff time, all the stations transmit data to the AP through contention. As a result, station 2 wins the contention and transmits data 3 to the AP.

Thereafter, the AP transmits ACK indicating the receipt of the data at station 3. When the AP transmits data 4 to station 4 after a PIFS, station 4 transmits ACK to the AP, indicating the receipt of the data.

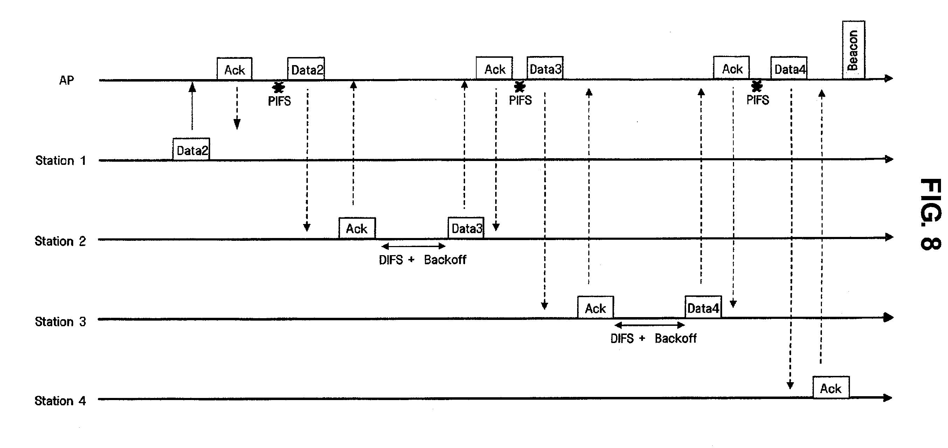

Figure 8 is a diagram schematically showing a process of transmitting data through contention in the DCF mode of a WLAN in accordance with the present invention. When the interval of a DCF mode starts, an AP and all stations transmit data through contention.

When station 1 having won the contention transmits data 2, which will be transmitted to station 2, to the AP, the AP stores the transmitted data 2 in a buffer, and transmits ACK to the station 1, indicating the receipt of the data.

After the PIFS has elapsed, the AP transmits the data 2 stored in the buffer to station 2. Station 2 transmits ACK to the AP, indicating the receipt of the data.

After waiting for a DIFS and a backoff time, the AP and all the stations transmit data to the AP through contention. As a result, station 2 wins the contention and transmits data 3 to the AP, which will be transmitted to station 3.

Thereafter, the AP transmits ACK indicating the receipt of the data to the station 2. The AP transmits the data 3 to the station 3 after a PIFS, and the station 3 transmits, to the AP, ACK indicating the receipt of the data.

After waiting for a DIFS and a backoff time, the AP and all the stations transmit data to the AP through contention. As a result, station 3 wins the contention and transmits data 4, which will be transmitted to station 4, to the AP.

Thereafter, the AP transmits ACK indicating the receipt of the data to the station 3. The AP transmits the data 4 to the station 4 after a PIFS, and the station 4 transmits ACK indicating the receipt of the data to the AP.

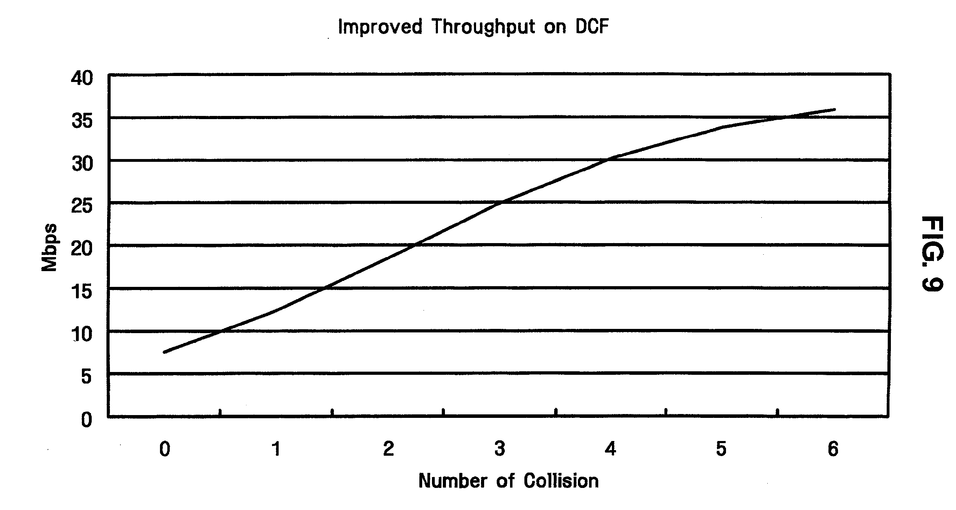

Figure 9 is a graph showing the difference between throughput in the DCF mode of the present invention and throughput in a conventional DCF mode. In the conventional DCF mode, as the number of collisions increases, the delay corresponding to data transmission is increased. In contrast, in the DCF mode of the present invention, data are transmitted based on the set threshold value without regard to the number of collisions. Accordingly, when the number of collisions is small, the difference between throughput in the DCF mode of the present invention and throughput in a conventional DCF mode is small. In contrast, as the number of collisions increases, the difference between throughput in the DCF mode of the present invention and throughput in a conventional DCF mode is increased.

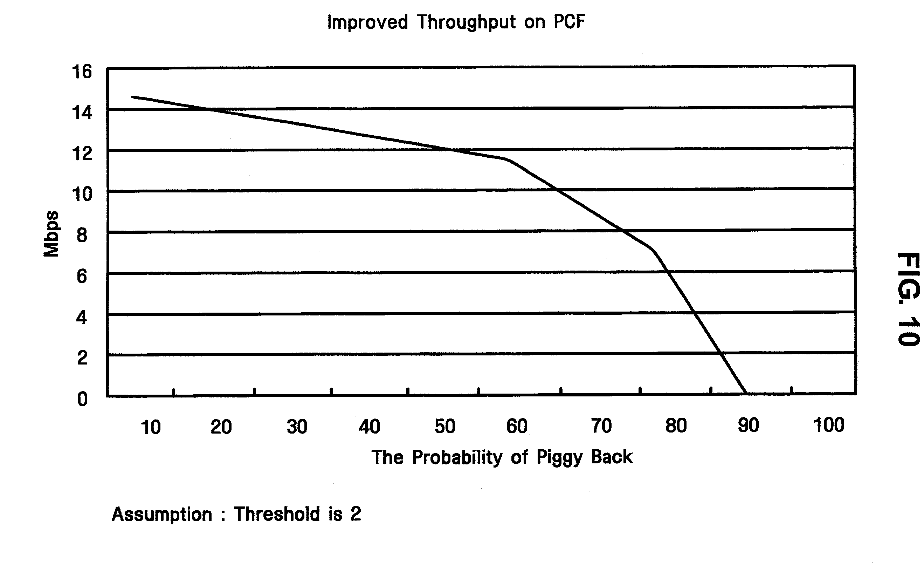

Figure 10 is a graph illustrating one important difference between the throughput in the PCF mode of the present invention, in which a threshold value is set, and throughput in a conventional PCF mode. In this case, it is assumed that the threshold value was set to two at the time of transmitting 1500 bytes of data.

In Figure 10, in the PCF mode, when the probability of a piggyback is 10 to 80%, differences in the amounts of data transmission of 3 to 14 Mbps arise. In the PCF mode of the present invention in which the threshold value is set, throughput is constant because data are transmitted according to the set threshold value without regard to the probability of a piggyback. In contrast, in the conventional PCF mode, throughput is influenced by the probability of a piggyback, so that throughput is decreased in proportion to the probability of a piggyback, thus resulting in a large difference in throughput.

As described above, the present invention provides the wireless network communication method using the AP, in which, in a PCF mode, at the time of transmitting data, the threshold value is set in the buffer of the AP, and, if the number of the pieces of data has exceeded the threshold value, the transmission of polling signals is interrupted and data stored in the buffer are transmitted to relevant stations, thereby reducing the delay of data transmission.

Additionally, in the interval of the DCF mode, the priority of data transmission is granted to the access point so that data stored in the buffer can be transmitted, thus minimizing the delay corresponding to data transmission.

Furthermore, the threshold value is set in the buffer of the AP, so that the size of the buffer is reduced and, therefore, the number of the pieces of data stored in the buffer is reduced, thus reducing the delay of data transmission.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A wireless network communication method using an Access Point (AP), comprising:
creating a polling list based on association IDentifications (IDs) of stations (1,2,3,4) stored in the AP;
transmitting a polling signal to one of the stations (1,2,3,4) according to the polling list in an interval of a Point Coordination Function (PCF) mode;
transmitting data from the one station in response to the polling signal transmitted from the AP;
receiving the data transmitted from the one station to the AP;
storing the data received from the one station in a buffer of the AP;
comparing a number of pieces of data stored in the buffer with a threshold value set in the buffer; and
if, as a result of the comparison, the number of the pieces of data exceeds the threshold value, not transmitting a polling signal to a next station and transmitting the data stored in the buffer to relevant stations (1,2,3,4).

2. The wireless network communication method as set forth in claim 1, wherein the transmitting data from the station in response to the polling signal transmitted from the AP further comprises, if the data transmitted does not exist, transmitting a null value to the AP.

3. The wireless network communication method as set forth in claim 1 or 2, further comprising:
if, as the result of the comparison, the number of the pieces of data exceeds the threshold value, not transmitting a polling signal to a next station and transmitting the data after waiting for a PCF Inter-Frame Space (PIFS); and
transmitting ACK from the stations (1,2,3,4) having received the data from the AP to the AP after waiting for a short inter-frame space.

4. The wireless network communication method as set forth in claim 1, 2 or 3, further comprising, if the interval of the PCF mode has not terminated after the data stored in the buffer are transmitted to the relevant stations (1,2,3,4), transmitting a polling signal from the AP to a next station.

5. A wireless network communication method using an AP in an infrastructure mode having an interval of a PCF mode and an interval of a DCF mode, comprising:
when the interval of the DCF mode starts, determining whether data exist in a buffer of the AP;
if, as a result of the determination, data exist in the buffer, transmitting the data stored in the buffer to relevant stations (1,2,3,4); and
transmitting data from one of the stations (1,2,3,4) through contention.

6. The wireless network communication method as set forth in claim 5, further comprising:
transmitting the data stored in the buffer to the relevant stations (1,2,3,4) after waiting for a PIFS; and
transmitting an ACK signal from the relevant stations (1,2,3,4) having received the data to the AP after waiting for a short inter-frame space.

7. The wireless network communication method as set forth in claim 5 or 6, wherein the transmitting the data stored in the buffer to the relevant stations (1,2,3,4) is performed after a PIFS in the interval of the DCF mode.

8. A wireless network communication method using an AP, comprising:
causing the AP and stations (1,2,3,4) to make contention to transmit data in an interval of a DCF mode;
transmitting data from one of the stations (1,2,3,4) having won the contention to the AP;
storing the data transmitted to the AP in a buffer of the AP;
transmitting the data stored in the buffer from the AP to a relevant station; and
transmitting data from the AP and the stations (1,2,3,4) through contention.

9. The wireless network communication method as set forth in claim 8, wherein the transmitting the data stored in the buffer from the AP to the relevant station is performed after a PIFS, and the transmitting the data from the AP and the stations (1,2,3,4) through contention is performed after a DIFS.
